# EUROPEAN PATENT APPLICATION

(11) **EP 3 798 813 A1**
(43) Date of publication of application: **31.03.2021**
(21) Application number: 19382820.9
(22) Date of filing: 24.09.2019
(51) Int. Cl.: G06F 3/12, B44C 5/00

(54) **METHOD FOR DECORATING A SUBSTRATE AND SUBSTRATE THUS DECORATED**

(71) Applicant: Barberan Latorre, Jesús Francisco, 08860 Castelldefels (Barcelona) (ES)
(72) Inventor: Barberan Latorre, Jesús Francisco, 08860 Castelldefels (Barcelona) (ES)
(74) Representative: Plasseraud IP

(57) **Abstract**

The invention relates to a method for decorating a substrate (1), comprising the steps of providing the substrate (1), detecting (40, 50) a first design (10) covering a first area of the substrate (1) and/or detecting the positioning of the first design (10) with respect to the substrate (1), providing (40, 41) a second design (20) which is a function of the first design (10) and/or of the positioning of the first design (10) with respect to the substrate (1), and printing (40, 60) the second design (20) covering a second area of the substrate (1).

## Description

### Technical field

The present invention relates to a method for decorating a substrate, especially one that is panel-shaped, and to a substrate thus decorated. The invention can be applied, for example, in the decoration of panels for furniture and all types of installations with panels.

### State of the art

In the manufacture of all types of furniture, as well as in other applications, panels made of wooden boards with a certain thickness are used. In these wooden boards, the lines of the grains or simply grain located on the front and rear surfaces (also called front or rear faces or, respectively, upper and lower) naturally have continuity on the lateral surfaces, also called edges, sides or lateral flanks.

When the panel is not made of a wooden board, but rather is determined by a substrate laminated on the front face thereof and, sometimes front and rear faces, a problem arises in the finish of the sides thereof.

In fact, laminated panels made of elements of a different kind are used. For example, the embodiment is known wherein a laminated panel is made up of a substrate formed, for example, by an HDF or MDF fibreboard, an agglomerate board, a plastic body, etc. and, on top of this substrate, at least the upper face thereof is laminated with a coating formed by a laminar element made of a layer of natural wood or a layer of synthetic material or a decorative paper, which is grained.

In the solutions known until now, these laminated panels made of at least two elements of different types end in flanks with edges adhered to them made of some material, plastic, paper, layer of natural wood or other, wherein the grain or finish thereof has nothing to do with the grain of the laminar element of the front face.

The same occurs in the case that the substrate has, in addition to the front laminar element made of a layer of natural wood or a layer of synthetic material or decorative paper, which is grained, a rear laminar element, also made of a layer of natural wood or a layer of synthetic material or decorative paper, which can also be grained.

Generally, there is the limitation that it is not possible to automatically provide complex designs on substrates, especially on panels, as the manual application of the design on the substrate, for example, of the grain on the edges of the panel is currently required. Likewise, the repair of designs, for example, in the case of the design coming off or being taken off the substrate, must also be done manually.

In light of the described disadvantages or limitations of the currently existing solutions, a solution is necessary which enables alternative or complex designs applied to substrates, especially to panels, to be provided in a simple and inexpensive manner. For example, it would be desirable to obtain a panel-shaped substrate with decoration simulating a panel made of natural wood, not only on the surfaces thereof by also in all the volume thereof, thereby simulating the thickness.

### Object of the invention

With the aim of meeting this objective and solving the aforementioned technical problems, in addition to providing additional advantages that can be derived later on, the present invention provides the method for decorating described below.

The method for decorating a substrate according to the invention comprises the steps of providing the substrate, detecting a first design covering a first area of the substrate and/or detecting the positioning of the first design with respect to the substrate, providing a second design which is a function of the first design and/or of the positioning of the first design with respect to the substrate, and printing the second design covering a second area of the substrate.

In the context of the invention, a design can be, for example, an image, in particular, a colour, a line, a shape, etc. as well as a texture. Substrate is understood as a body foreseen or adapted to be decorated with a design, in particular to be printed. In other words, it is a support body for the design, with a support for the design in the shape of, for example, a laminate. The substrate can have any shape, for example, of a sheet or, especially according to the invention, a panel.

Additionally, the method according to the invention can comprise the steps of providing a third design which is a function of the first design and/or the second design, and printing the third design covering a third area of the substrate.

According to the invention, it is preferably envisaged that first area, the second area and/or the third area are different areas of the substrate, meaning they do not overlap each other.

Preferably, the printing of designs is performed by inkjet printing. Inkjet printing provides the advantage of its automation and control capacity, enabling very diverse or complex designs to be printed with precision and quality.

Likewise, preferably, the detection of designs is performed by computer vision. The term detection of designs includes the concepts of capturing, obtaining, acquiring, etc. the designs for the subsequent processing thereof in the method. Likewise, the detection by computer vision provides the advantage of its automation and control capacity, enabling designs to be detected with precision and quality. Therefore, it can be especially applied in cooperation with inkjet printing as far as how they jointly enable designs to be detected and printed with precision and quality.

In order to provide the second design or the third design a management system, for example, can be used which selects a design from among a group of memorised designs in order to adapt it to the first design. Alternatively, the designs can be generated by means of a design generation software configured to extrapolate the design from the respective first design or second design.

In a preferred embodiment, the first area, the second area and/or the third area are adjacent to each other. In particular, the designs can be arranged adjacent to each other, for example, one next to the other, connected to each other, forming one unit, etc.

In this manner not only can continuity, for example, be achieved between a design with grain lines on the front surface and a design on one of the lateral surfaces of the decorated panel, but also between designs of the adjacent lateral surfaces.

It is envisaged that, according to the method in accordance with the invention, the function of providing the second design and/or the third design starting from the first design and/or the second design is such that it assigns designs which are continuous to each other in an area where the respective areas are adjacent to each other, in particular, with respective images or textures which are continuous to each other.

Likewise, in the method according to the invention it is envisaged that the first area, the second area and/or the third area extend over respective surfaces of the substrate which are mutually inclined, in particular, at 90°. For example, in the case that the substrate has a panel shape, said areas can extend over respective faces of the panel between borders of the panel.

In the case that the substrate is panel-shaped or similar, it is envisaged that the first area, the second area and/or the third area extend at least partially over the front surface, the rear surface or any one of the lateral surfaces (in particular, over the entire respective surface) of the panel, respectively.

Preferably, according to the invention it is envisaged that detection and/or printing is performed with the panel-shaped substrate arranged horizontally. Also preferably, detection and/or printing are performed in fixed positions of a process line with respect to the positions of the process line that the substrate is moved along, in particular, horizontally.

If detection and/or printing of designs are performed in fixed positions of a process line, two alternatives are envisaged. In a first alternative, the printing and/or detection of designs extending over opposite lateral surfaces of the panel-shaped substrate are performed in one same position of the process line, the method including a step for a 90° rotation of the panel-shaped substrate horizontally in the same position of the process line. In a second alternative, the detection and/or printing of designs extending in opposite lateral surfaces are performed in different positions of the process line, the method including a step for a 90° rotation of the panel-shaped substrate horizontally in an intermediate position of the process line.

Below, the method according to the invention applied to a panel-shaped substrate or similar is explained. Generally, the first design can be previously applied on the substrate, for example, in the form of a laminate or a coating. In this case, the method according to the invention can be applied to a substrate made of a laminated or coated panel, wherein the first design is provided, respectively, by the laminate or coating of the panel. To this end, in the context of the invention, decorated panel, particularly laminated or coated, more particularly, printed, is understood as a panel-shaped substrate whereon a decoration has been applied, particularly a laminate or a coating, more particularly a printing.

For example, for the case wherein the first design, the second design and/or the third design is a wood grain, the first design of the wood grain can be provided in the substrate on a first support which is a layer of wood.

In particular, the method of the invention can start by providing a laminated panel made up of two elements of different types, defined by: a substrate made up of an HDF or MDF fibreboard, an agglomerate board, a plastic body, etc. and a front laminar coating element, made up of a layer of natural wood or a layer of synthetic material or a decorative paper, which is grained, the edges are then prepared if these edges need it, for the subsequent treatment thereof.

For example, if the substrate is a board made of agglomerated particles, it is common to edge it by means of an edge made of plastic material or paper or another element, with a background colour similar to that of the upper laminar element or the colour white (for the subsequent colouring thereof). It is also possible to coat the edges with putty or apply any other conventional system which is used to prepare the edges of a substrate.

After preparing the edges of the laminated panel, if necessary, said materials of the edges need to be treated or, if applicable, the edge itself, so that the ink is correctly fixed in a subsequent printing process by means of inkjet technology.

With the edges of the laminated panel ready, and with said panel travelling on a transport of the inkjet machine, a reading is performed by means of a computer vision system, or similar system, of the cut of the grains of the laminar element of the upper face of the panel with respect to the edges formed in the intersection with the edge or edges that must be decorated.

The position data of the grains in the edge is transferred to a management system which, by means of the corresponding software, will adjust an image of a file with different grains so that when printing said image on this edge, it makes them coincide on the edge with the positions of the grains of the upper laminar element.

All of this process can be done in a line or in parts and printed afterwards.

Printing the four flanks of the panel can be done with a single inkjet head printer in two passes, such that in the first pass the two lateral edges of the panel are printed, and after printing, preferably automatically, the panel is rotated ninety degrees and the other two edges are printed, or it can be done with two printers, and in that case in a single pass.

In the case of a panel made up of an intermediate substrate made up of an HDF or MDF fibreboard, an agglomerate board, a plastic body, etc. and two laminar elements, made up of a layer of natural wood or a layer of synthetic material or a decorative paper, which is grained, and which coat the substrate on the front and rear faces thereof, the process is the same as the one described previously, with two options. In the first option, the same process is applied as in the previous case of the panel that only had the laminar element on the front face thereof, in which case the grains of the edges will be related to the grain of the front laminated panel.

Preferably, a computer vision system can detect the grains of the two laminar elements, front and/or rear, transferring them to the management system which, by means of software, is able to adjust the grains of the edges; such that on the ends thereof they coincide with the grains of the front and rear laminar elements and in the central area they are matching or have continuity with each other.

In the case of a panel made up of an intermediate substrate and two laminar elements which coat it on the front and rear portions thereof, if only the front laminar element has a grain, the printing of the edges can be done according to the first option.

Although the explanation made until now has been specified to perform the "synchronisation" or function of continuity of the grains of the face or faces of the laminated elements with the grains of the sides of the panel, the method can be extended to any design or decorative motif. In particular, the design can be made to coincide or continue from the laminar or coating element or elements with the edges of the panel, these designs or motifs being geometric figures, any type of human, animal, architectural, landscape figures, etc., shapes, colours and/or a combination of these motifs. The designs or motifs printed by means of inkjet technology can be of any kind, including all the possibilities currently available in said technology, for example creating textures, 3D finishes, etc.

Another object of the present invention is a substrate able to be obtained by means of the described method, especially having the shape of a panel, in particular a laminated panel, the edges of which have been decorated according to the method described.

### Description of the drawings

Figure 1 is a perspective and schematic view which shows one embodiment known until now.
Figure 2 is a perspective view which schematically shows one embodiment of a decorated panel obtained according to one embodiment of a method according to the invention. The decorated panel imitates a panel made of a wooden board.
Figure 3 shows a block diagram of the arrangement of the different means intervening in one embodiment of the method according to the invention.
Figure 4 schematically shows one embodiment wherein a design arranged on a panel laminated on the front face thereof by means of a laminar element is read by the reading heads of a computer vision system.
Figure 5 schematically shows one embodiment wherein a design arranged on a panel laminated on the front face thereof and another arranged on the rear face thereof, by means of respective laminar elements, is read by the reading heads on the front face thereof and by the reading heads on the rear face thereof of a computer vision system.
Figure 6 schematically shows one embodiment of the printing process by means of the inkjet heads of a printer.
Figure 7 schematically shows one embodiment of a reading and printing process in two passes of one same printer and one same computer vision system, wherein the panel to be decorated is rotated 90° and the reader heads and the printing heads are separated with respect to the panel for the reading and printing thereof on the other two opposite edges.
Figure 8 schematically shows one embodiment of a reading and printing process with two printers and two computer vision systems arranged at different points of the reading and printing process line, wherein the panel to be decorated is rotated 90° in an intermediate step of the line between the printing and reading step of the respective opposite edges.

### Detailed description of the invention

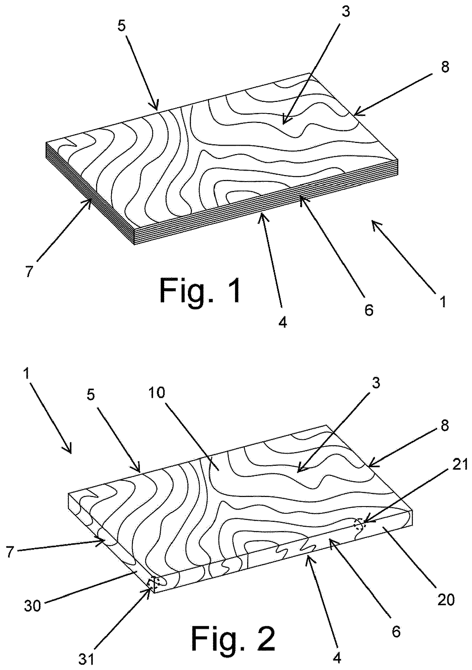

In the manufacture of all types of furniture, as well as in other applications, panels made of wooden boards with a certain thickness are used. In the embodiment known until now which is shown in Figure 1, a panel is made up of a substrate with a grained upper laminate and with the flanks thereof edged without any continuity with the grains of the upper laminar element.

When the panel is not made up of a wooden board, but is rather determined by a substrate laminated on the front face thereof and sometimes front and rear faces, there are problems in the finish of the sides thereof.

In fact, laminated panels made of elements of a different kind are known. For example, the embodiment is known wherein a laminated panel is made up of a substrate made up of an HDF or MDF fibreboard, an agglomerate board, a plastic body, etc. and, on top of this substrate, at least the upper face thereof is coated with a laminar element made up of a layer of natural wood or a layer of synthetic material or a decorative paper, which is grained.

In the solutions known until now, these laminated panels made of at least two elements of different types end in flanks with edges adhered to them made of some material, plastic, paper, layer of natural wood or other, wherein the grain or finish thereof has nothing to do with the grain of the laminar element of the upper face, as seen in Figure 1.

The same occurs in the case that the substrate has, in addition to the front laminar element made of a layer of natural wood or a layer of synthetic material or a decorative paper, which is grained, a rear laminar element, also made of a layer of natural wood or a layer of synthetic material or a decorative paper, which can also be grained.

As seen in Figure 2, in the wooden boards or panels, the lines of the grains located on the upper and lower faces have continuity on the surfaces of the lateral flanks. According to one embodiment of the invention described below, it is possible to obtain panels like the one shown in Figure 2, which simulate the natural grains of wood.

The present invention enables the sides of a laminated panel (1) to be decorated, the panel is made up of at least two elements of different types (2) to (8). This method enables, for example, a final result to be obtained which is identical or similar to the finish of a natural wooden board, like the one in Figure 2, meaning that on the sides thereof the grain has continuity with respect to the grains of the laminate of the front face (3), the rear face (4) and/or the lateral faces (5) to (8), thus being able to seem as if it were the cut of a natural wood board.

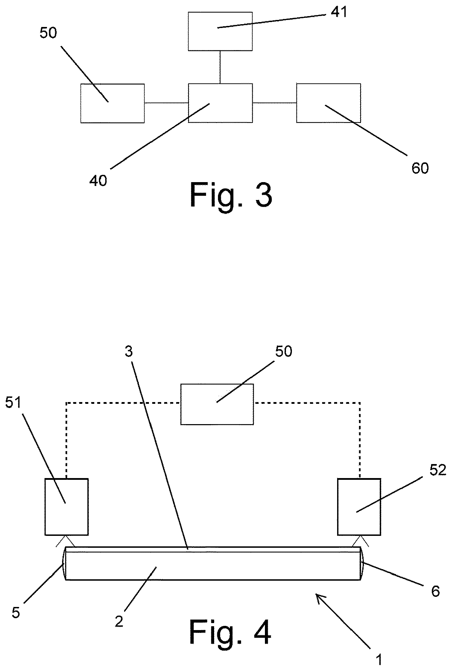

In reference to Figures 3 to 6, one embodiment of the method for decorating proposed to achieve this goal is described below:
First, if starting with a laminated panel (1), made up of two elements: a lower substrate (2) made up of an HDF or MDF fibreboard, an agglomerate board, a plastic body, etc. and an upper laminar coating element (3) made up of, for example, a layer of natural wood or a layer of synthetic material or a decorative paper, which is grained, the edges (5) to (8) are then prepared if these edges need it, for the subsequent treatment thereof. Figure 2 shows a grain design (10), (20) and (30), in the respective front face (3) and lateral faces (6) and (7).

On the borders between the front face (3) and the lateral faces (5) to (8), as well as between the lateral faces (6) and (7), a continuous grain (21), (31) is observed, with the grain lines of the design continuous between the respective designs (10), (20) and (30). As seen in Figure 2, in this case, the first design (10) is a grain which covers all of the front face (3) of the panel, surface which constitutes the first area according to the invention. The second design (20) is a grain, continuous with the grain of the first design (10) and adjacent to same in the intermediate edge of the panel, which covers all of the lateral face (6) of the panel, such that the natural thickness of a wooden panel is imitated. Likewise, the third design (30) is a grain, continuous with the grain of the first design (10) and the second design (20) and adjacent to same, which covers all of the lateral face (7) of the panel, such that the natural thickness of a wooden panel is imitated. The first design (10) has continuity with the second design (20) and with the third design (30) (see references (21) and (31)). Likewise, it is envisaged that the lateral faces (5) and (8), which are not visible in Figure 2, as well as the rear face (4), also not visible, can have continuity in the designs thereof with respect to the respective adjacent faces thereof.

For example, if the substrate (2) is a board made of agglomerated particles, it is common to edge it by means of an edge made of plastic material or paper or another element, with a background colour similar to that of the upper laminar element or the colour white (for the subsequent colouring thereof). It is also possible to coat the edges (5) to (8) with putty or apply any other conventional system which is used to prepare the edges (5) to (8) of a substrate (2).

After the preparation of the edges (5) to (8) of the panel (1) to be decorated, if necessary, said materials of the edges (5) to (8) need to be treated or, if applicable, the edge (5) to (8) itself, so that the ink is correctly fixed in a subsequent printing process by means of inkjet technology or another printing technology which enables this type of printing to be performed.

With the edges (5) to (8) of the panel (1) ready, and with said panel (1) travelling on a transport of a printing machine, preferably an inkjet printing machine, but without this being considered as limiting, a reading is performed by means of the reading heads (51 and 52) of a computer vision system (50), or a similar reading system, of the cut of the grains of the laminar element (3) of the front face of the panel (1) with respect to the edges formed in the intersection with the edge or the edges (5) to (8) that must be decorated.

This position data of the grains in the edge is transferred to a management system (41) which, by means of the corresponding software, will adjust an image of a file with different grains so that when printing said image on the corresponding edge (5) to (8) there is continuity or they coincide on the edge with the positions of the grains of the front laminar element (3).

As shown schematically in Figure 3, the method can be ordered by a processor (40) which interacts with detection means, for example, by computer vision or a computer vision system (50) and an inkjet printer (60). As indicated, the different images to be printed can be generated, for example, by the management system (41).

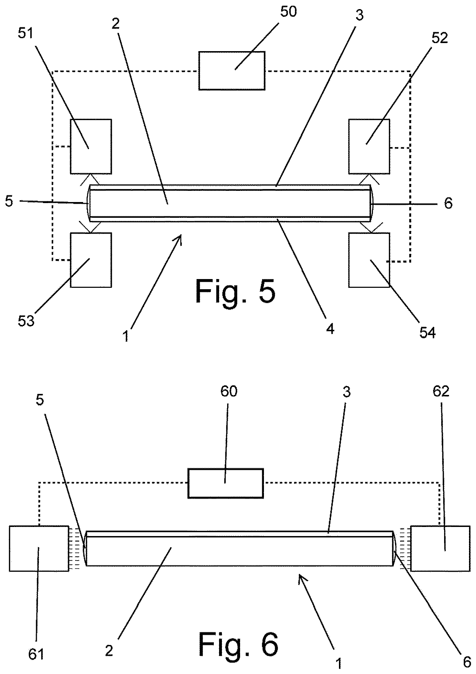

Figures 4 and 5 show the reading pass of the front laminar element (3) by means of the reading heads (51) and (52) and, optionally, of the rear laminar element (4) by means of the reading heads (53) and (54) of the computer vision system (50).

Figure 6 shows the printing pass of the opposite edges (5) to (8) of the panel (1) by means of the printing heads (61) and (62) of the printer (60).

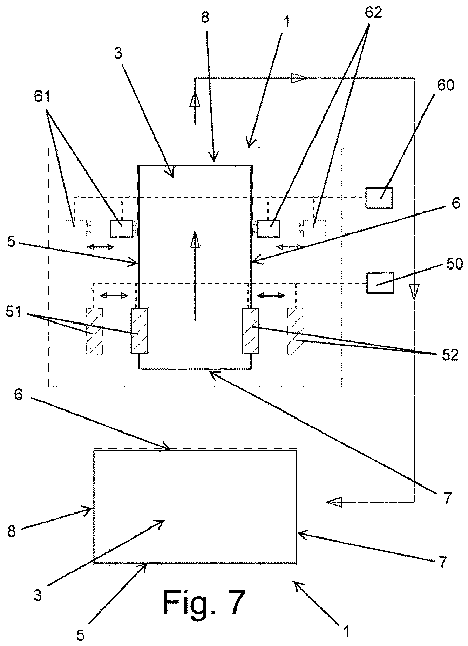

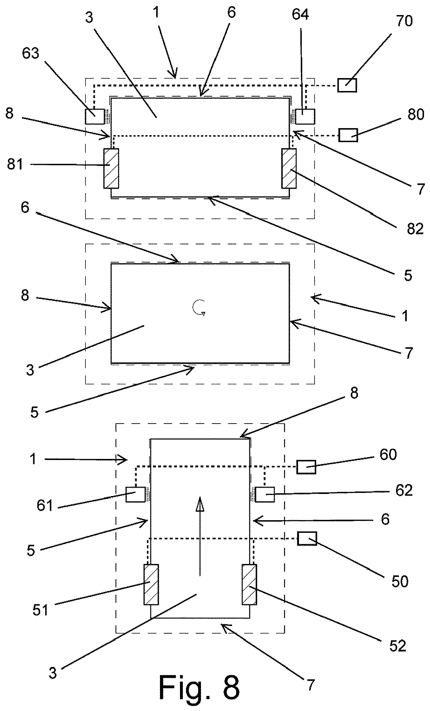

All this process can be done in a line or in parts and printed afterwards, as shown in Figures 7 and 8.

As seen in Figure 7, printing the four flanks (5) to (8) of the panel (1) can be done in two passes, with a single printer (60) having the inkjet heads (61) and (62) thereof located in relation to two of the edges (5) to (8) of the panel (1), such that in the first pass the two lateral edges (5) to (8) of the panel (1) are printed, and after printing, preferably automatically, the panel (1) is rotated ninety degrees and the other two edges (5) to (8) are printed.

Alternatively, as seen in Figure 8, the four flanks (5) to (8) of the panel (1) can be printed with two printers (60) and (70) arranged at different points of the process line and, therefore, in a single pass.

In the case of a panel (1) made up of an intermediate substrate (2) made up of an HDF or MDF fibreboard, an agglomerate board, a plastic body, etc. and two laminar elements (3) and (4), made up of a layer of natural wood or a layer of synthetic material or a decorative paper, which is grained, which coat the substrate (2) on the front and rear faces thereof, the process is the same as the one described previously, with two options. In the first option, the same process is applied as in the previous case of the panel (1) that only had the laminar element (3) on the front face thereof, in which case the grains of the edges (5) to (8) will be related to the grain of the front laminated panel (3).

In the second option, the computer vision system will see the grains of the two laminar elements, front (3) and rear (4), transferring them to the management system which, by means of the software thereof, will be able to adjust the grains of the edges (5) to (8) such that on the ends thereof they coincide with the grains of the front (3) and rear (4) laminar elements and in the central area they match each other.

Likewise, the grains of the two adjacent lateral faces (3) and (4) can have continuity with each other.

In this case of a panel (1) made up of an intermediate substrate (2) and two laminar elements (3) and (4) which coat it on the front and rear thereof, if only the front laminar element (3) has a grain, the printing of the edges (5) to (8) would be done according to the first option.

Without altering the essence of the invention, the panel (1) being made up of a substrate (2) and one or two laminar coating elements (3) and (4), the decoration of the edges (5) to (8) of the panel (1) can be done by decorating the four edges (5) to (8) or only a portion thereof, one, two or three edges. Likewise, the decoration can occupy the entire surface of the respective edge (5) to (8) or only one portion or portions thereof, in the longitudinal or transverse direction.

Although the explanation made until now has been specified to perform the "synchronisation" of the grains of the face or faces of the laminated elements (3) and (4) with the grains of the edges (5) to (8) of the panel, the method can be extended to any design or decorative motif which is to coincide or continue from the laminated element or elements (3) and (4) with the edges (5) to (8) of the panel (1), these designs or motifs being geometric figures, any type of human, animal, architectural, landscape figures, etc., shapes, colours and/or a combination of these motifs. The designs or motifs printed by means of inkjet technology or through another technology able to perform this printing can be of any kind, including all the possibilities currently known, for example creating textures, 3D finishes, etc.

Another object of the present invention is the panel (1), the sides (5) to (8) of which are decorated according to the method object of the present invention; such that the panel (1) has at least one of the edges thereof decorated completely or partially, with printing which establishes a continuity with respect to the finish of the front laminar element (3) and/or, if applicable, the rear laminar element (4).

## Claims

1. A method for decorating a substrate (1), comprising the steps of providing the substrate (1),
detecting (40, 50) a first design (10) covering a first area of the substrate (1) and/or detecting the positioning of the first design (10) with respect to the substrate (1),
providing (40, 41) a second design (20) which is a function of the first design (10) and/or of the positioning of the first design (10) with respect to the substrate (1), and
printing (40, 60) the second design (20) covering a second area of the substrate (1).

2. The method according to claim 1, additionally comprising the steps of providing a third design (30) which is a function of the first design (10) and/or the second design (20), and
printing (40, 60) the third design (30) covering a third area of the substrate (1).

3. The method according to one of the preceding claims, wherein the printing of the substrate (1) is performed by inkjet (60).

4. The method according to one of the preceding claims, wherein the detection of the substrate (1) is performed by computer vision (50).

5. The method according to one of the preceding claims, wherein the first area, the second area and/or the third area are adjacent to each other.

6. The method according to one of the preceding claims, wherein the function of providing the second design (20) and/or the third design (30) starting from the first design (10) and/or the second design (20) assigns designs (10, 20, 30) which are continuous to each other in an area where the respective areas are adjacent to each other, in particular, with respective images or textures which are continuous to each other (21, 31).

7. The method according to one of the preceding claims, wherein the first area, the second area and/or the third area extend over respective surfaces (3, 4, 5, 6, 7 and 8) of the substrate (1) which are mutually inclined, in particular, at 90°.

8. The method according to one of the preceding claims, wherein the substrate has a the shape of a panel (1), and wherein the first area, the second area and/or the third area extend at least partially over the front surface (3), the rear surface (4) or any one of the lateral surfaces (5, 6, 7, 8) of the panel (1), respectively.

9. The method according to claim 8, wherein the detection and/or the printing are performed with the panel (1) arranged horizontally.

10. The method according to one of claims 8 or 9, wherein the detection and/or printing of designs (10, 20, 30) are performed in fixed positions of a process line with respect the positions of the process line that the panel (1) is moved along.

11. The method according to claim 10, wherein the detection and/or printing of designs (10, 20, 30) extending over opposite lateral surfaces (5, 6, 7, 8) of the panel (1) are performed in one same position of the process line, the method including a step for a 90° rotation of the panel (1) horizontally in the same position of the process line.

12. The method according to claim 10, wherein the detection and/or printing of designs (10, 20, 30) extending over opposite lateral surfaces (5, 6, 7, 8) are performed in different positions of the process line, the method including a step for a 90° rotation of the panel (1) horizontally in an intermediate position of the process line.

13. The method according to one of the preceding claims, wherein the first design (10), the second design (20) and/or the third design (30) is a wood grain.

14. The method according to claim 13, wherein the first design (10) is a wood grain and is provided in the substrate (1) on a first support which is a layer of wood.

15. A substrate (1) able to be obtained according to a method according to one of the previous claims.
